# EUROPÄISCHE PATENTANMELDUNG

(11) **EP 1 333 256 A2**
(43) Veröffentlichungstag der Anmeldung: **06.08.2003**
(21) Anmeldenummer: 02026621.9
(22) Anmeldetag: 29.11.2002
(51) Int. Cl.: G01F 23/296

(54) **Schwingungsgrenzstandsensor**

(30) Priorität: 28.01.2002 DE 10203461
(71) Anmelder: VEGA Grieshaber KG, 77709 Wolfach (DE)
(72) Erfinder: Fehrenbach, Josef, 77716 Haslach (DE)
(74) Vertreter: Westphal, Mussgnug & Partner

(57) **Zusammenfassung**

Die Erfindung betrifft ein Verfahren zur Feststellung und/oder Überwachung eines vorbestimmten Füllstandes eines Füllgutes in einem Behälter mit einer in den Behälterinnenraum zeigenden Schwingstabsonde, die Bestandteil eines elektronmechanischen Schwingungssystems ist. Erfindungsgemäß werden nach einer erfolgten Anregung des Systems eine oder mehrere charakteristischer Kenngrößen gemessen und diese Kenngrößen bei der Auswertung der Messung berücksichtigt.

## Beschreibung

Die Erfindung betrifft ein Verfahren zur Feststellung und /oder Überwachung eines vorbestimmten Füllstands eines Füllguts in einem Behälter gemäß den Merkmalen des Oberbegriffs des Anspruchs 1.

Aus der DE 3348119 C2 ist ein Grenzstandgeber zur Feststellung eines vorbekannten Füllstands bekannt, der eine in den Behälter ragende Schwingstabsonde aufweist, welche von einer elektrischen Erregungseinrichtung zu Schwingungen angeregt wird. Die Frequenz der Schwingung ist abhängig vom Füllstand im Behälter. Durch Verstärkung und Rückkopplung des elektrisch detektierten mechanischen Schwingungssignals auf den Anregungseingang entsteht ein schwingungsfähiges System, üblicherweise als Oszillator bezeichnet.

Ähnliche Vorrichtungen und Verfahren sind beispielsweise in der DE 19720519 C2, der EP 0985916 A1 und der EP 0985917 A1 beschrieben. Allen gemeinsam ist, dass der angegebene Vibrationsgrenzstandsensor grundsätzlich ein zur kontinuierlichen Selbstschwingung angeregtes elektromechanisches System umfasst. Zum Aufbau eines solchen Oszillators sind verschiedene Möglichkeiten bekannt, die sich in der Ausführung des mechanischen Schwingelements, des elektromechanischen Wandlersystems und des elektrischen Entwurfs des Oszillators unterscheiden.

Als mechanisches Schwingelement werden vorzugsweise mindestens zwei Schwingstäbe verwendet, die entweder koaxial oder parallel zueinander angeordnet sind.

Elektromechanisch angetrieben ist dieses schwingungsfähige mechanische System üblicherweise über ein durch Wechselspannung erregtes Piezoelement und ebenso dient ein Piezoelement dazu, die mechanische Schwingung zu detektieren und zurück in eine elektrische Schwingung zu verwandeln. Man kann dazu Antriebsund Detektionseinrichtung trennen in zwei separate Piezoelemente, in zwei separate Zonen eines einzigen Piezoelements oder beide Funktionen vereinen in einem einzigen Piezoelement.

Bei getrennten Antriebs- und Detektionselementen kann das gesamte elektromechanische Schwingsystem ersatzweise als elektrischer Vierpol betrachtet werden, der eine an die beiden Eingangspole angelegte Spannung mit frequenzabhängiger Amplitude und Phasendrehung an die beiden Ausgangspole überträgt. Das Übertragungsverhalten dieses Vierpols ist einem elektrischen Schwingkreis vergleichbar.

Ein sowohl zum Antrieb als auch zur Detektion benutztes einziges Piezoelement weist üblicherweise zwei Anschlüsse auf, weshalb es ersatzweise als elektrischer Zweipol charakterisiert werden kann. Elektrische Zweipole sind allgemein gekennzeichnet durch ihre eventuell frequenzabhängige elektrische Impedanz.

Es sei hier noch angemerkt, dass ein als elektrischer Zweipol aufzufassendes einzelnes Piezoelement durch Zeitmultiplexbetrieb, d.h. periodische Umschaltung zwischen Antriebs- und Detektionsfunktion an den Anschlusspolen, das Verhalten eines elektrischen Vierpols nachbilden kann.

Mit den beschriebenen, als elektrische Zwei- oder Vierpole ersatzweise zu betrachtenden Schwingungssystemen können in an sich bekannter Weise elektrische Oszillatoren aufgebaut werden. Bestandteile eines Oszillators sind immer Verstärkungs- und Rückkopplungseinrichtungen, von denen mindestens eine frequenzselektiv sein sollte. Bevorzugte Ausführungsformen von Oszillatoren enthalten beispielsweise den frequenzselektiven, als elektrischen Schwingkreis zu betrachtenden Vierpol in der Rückkopplungsschleife der rückgekoppelten Verstärkerschaltung.

In weiteren Ausführungsformen sind die Oszillatoren gekennzeichnet durch eine rückgekoppelte Verstärkungseinrichtung, bei der die Verstärkung abhängig von der ersatzweise als elektrischer Zweipol zu betrachtenden Schwingungseinrichtung ist. Der dadurch gebildete frequenzselektive Verstärker ist in seiner Verstärkung abhängig von der elektrischen Impedanz des das Schwingungsgebilde charakterisierenden Zweipols.

Problematisch bei allen diesen Vibrationsgrenzstandsensoren ist der Aufbau des Oszillators in der Art, dass unter allen Betriebsbedingungen ein sicheres Anschwingen bzw. ein kontinuierliches Schwingen des Oszillators gewährleistet ist. Durch Eintauchen des Sensors ins Füllgut beispielsweise erhöht sich die Dämpfung des Schwingungssystems, verändert sich dessen Eigenfrequenz und Phasendrehung, womit die Rückkopplungs- oder Verstärkungscharakteristik des Oszillators mehr oder weniger starken Wandlungen unterliegt. Damit ein Oszillator unter allen vorkommenden Betriebseigenschaften des elektromechanischen Schwingelements sicher schwingt, sind oft komplizierte und aufwändige Schaltungs- und / oder Konstruktionsmaßnahmen notwendig. Außerdem können die als Zweipol oder Vierpol-Übertragungsglied zu betrachtenden Schwingungselemente ähnliche Eigenschaften in verschiedenen z.T. relativ weit voneinander entfernten Frequenzpunkten besitzen. Wenn dadurch die Schwingbedingung des Oszillators für verschiedene Frequenzen erfüllbar ist, schwingt das System eher zufällig auf der einen oder anderen Frequenz und lässt dadurch keine Aussage über den Befüllungszustand des Behälters zu. Deshalb muss wiederum mit aufwändigen Maßnahmen dafür gesorgt werden, dass das System immer auf der definierten, gewollten Frequenz schwingt und eine zuverlässige Meldung des Überoder Unterschreitens eines bestimmten Behälterfüllstands ermöglicht.

Aufgabe der vorliegenden Erfindung ist es deshalb, ein Verfahren anzugeben, welches zuverlässig und mit geringem Aufwand die Grenzstanddetektion mittels eines in den Behälter ragenden Schwingungssensors gestattet.

Erreicht wird dieses Ziel durch ein Verfahren, welches durch Anregung des schwingungsfähigen Systems, Messung einer oder mehrerer charakteristischer Kenngrößen der Reaktion des Systems auf die Anregung und Auswertung dieser Kenngrößen gekennzeichnet ist.

Im einfachsten Fall bedeutet dies das elektrische Übertragungsverhalten des als Vierpol zu betrachtenden Schwingsystems oder die Impedanz des als Zweipol betriebenen Schwingungselements zu bestimmen und auszuwerten Dies geschieht vorzugsweise über einen bestimmten Frequenzbereich, in dem Übertragungsverhalten bzw. Impedanz charakteristische Merkmale aufweisen, welche eindeutig auf den Befüllungszustand schließen lassen.

In einer ersten bevorzugten Ausführung wird das Schwingungssystem mit verschiedenen Frequenzen angeregt und bei allen Frequenzen die Reaktion des Systems gemessen. Zur Anregung mit verschiedenen Frequenzen ist es möglich, eine bestimmte Anzahl von diskreten Frequenzpunkten gezielt nacheinander anzufahren und diesen Frequenzdurchlauf periodisch zu wiederholen. Alternativ ist es auch möglich einen Frequenzbereich kontinuierlich zu durchfahren. Diese Vorgehensweise ist unter dem Stichwort Wobbelung bekannt.

Für die als Vierpol zu betrachtenden Schwingungssysteme kann das frequenzabhängige Verhältnis sowohl von Ausgangs- zu Erregungsamplitude und / oder von Ausgangs- zu Eingangsphase der elektrischen Wechselspannung gemessen und ausgewertet werden. Für die als Zweipol betriebenen Schwingungssysteme wird eine Serienschaltung aus einer bekannten Impedanz und der zu untersuchenden Impedanz der Zweipolschaltung gebildet, über der eine frequenzvariable Eingangs- bzw. Erregerspannung eingespeist wird. Durch Messung des Verhältnisses der Spannung über der gesamten Serienschaltung zu der Spannung über dem Zweipol sowie eventuell der Messung der Phasenverschiebung dieser Spannungen können frequenzabhängige Kennwerte der Zweipolimpedanz ermittelt und ausgewertet werden.

In einer zweiten bevorzugten Ausführungsform wird das schwingungsfähige System periodisch impuls- oder sprungförmig erregt. Nach dem Ende der zeitlich begrenzten, üblicherweise sehr kurzen Erregung wird die Reaktion des elektromechanischen Systems gemessen und ausgewertet. Diese Reaktion ist im Regelfall eine abklingende mechanische Schwingung bzw. am elektromechanischen Wandler messbare elektrische Schwingung. Daran sind die Parameter Anfangsamplitude, Frequenz und Abklingzeitkonstante messbar, aus denen eine Aussage darüber ableitbar ist, ob der Grenzstandsensor ins Füllgut eingetaucht ist oder nicht.

In einer dritten bevorzugten Ausführungsform schließlich wird das Schwingsystem, das hier bevorzugt als Vierpol aufgebaut ist, eingangsseitig mit einer im allgemeinen bandbegrenzten Rauschspannung, sogenanntem rosa Rauschen beaufschlagt. In diesem Fall misst man als Reaktion auf die Anregung am Ausgang ein elektrisches Signal, welches nur noch bestimmte Frequenzanteile enthält. Die meisten Frequenzanteile des breitbandigen Anregesignals werden durch das elektromechanische Schwingsystem ausgefiltert. Die Auswertung des Ausgangssignals erfolgt bevorzugt im Frequenzbereich, beispielsweise über Filterbänke oder einfacher durch eine Fouriertransformation des Signals vom Zeitbereich in die Frequenzebene. Dies erfordert eine Digitalisierung des zeitkontinuierlichen Spannungssignals und Durchführung einer schnellen Fouriertransformation (Fast Fourier Transformation FFT). Die über der Frequenzachse aufgetragenen Ausgangsamplituden erlauben eine Aussage über das momentane Übertragungsverhalten des Schwingsystems und damit über die Füllgutbedeckung des Sensor-Schwingelements.

Die Erfindung wird nachfoldend anhand von Ausführungsbeispielen in Zusammenhang mit Zeichnungen näher erläutert. Es zeigen:
- Fig. 1: ein erstes Ausführungsbeispiel einer Schaltungsanord nung zur Durchführung des zuvor im Zusammenhang mit der Frequenzwobbelung beschriebenen erfindungsgemäßen Verfahrens,
- Fig. 2: Signalverläufe zu der Schaltungsanordnung von Fig. 1,
- Fig. 3: ein zweites Ausführungsbeispiel für eine Schaltungsanordnung nach der Erfindung,
- Fig. 4: ein drittes Ausführungbeispiel einer Schaltunganordnung nach der Erfindung,
- Fig. 5: Signalverläufe zu Fig. 4,
- Fig. 6: ein viertes Ausführungsbeispiel einer Schaltungsanor dung nach der Erfindung, und,
- Fig. 7: Signalverläufe zu Fig. 6

Ein als elektrischer Vierpol zu betrachtendes elektromechanisches Schwingsystem 1, welche getrennte Anrege- und Detektionsschwingelemente 2, 3 besitzt, wird an den Eingangspolen erregt durch die Spannung U_{IN} der Wechselspannungsquelle 4. Das mechanische Schwingelement, welches z.B. als Schwinggabel in den Behälter ragt, ist in dieser Darstellung nicht explizit gezeigt, sondern es ist nur dessen Wirkung als Kopplung zwischen den elektromechanischen Schwingelementen 2, 3 in Form eines Pfeils angedeutet. Die am Vierpolausgang anstehende Spannung U_{OUT} wird im Verstärker 5 verstärkt.

Durch die Steuer- und Auswerte- und Ausgabeeinheit 6 wird die Frequenz der Wechselspannungsquelle 4, die in diesem Fall auch als voltage controlled oscillator VCO bezeichnet wird, kontinuierlich über einen bestimmten Bereich verändert. Um eine Aussage über den Betriebszustand des Vierpols 1, d.h. über die Füllgutbedeckung des Grenzstandsensors machen zu können, muss die verstärkte Ausgangsspannung U_{OUT}' ausgewertet werden. Auswertbar sind sowohl die Amplitude A als auch die Phase ϕ dieser Spannung, jeweils in Relation zur Eingangsspannung U_{IN}. Der Verlauf der Amplitude und / oder Phasendifferenz über der Wobbelzeit, was gleichbedeutend der Frequenz ist, ist in charakteristischer Weise abhängig von der Sensorbedeckung. Durch Einspeisung der Ausgangsspannung U_{OUT}' in einen Amplitudendetektor 7, der beispielsweise die Wechselspannung gleichrichtet und glättet, sowie zusammen mit der Eingangsspannung U_{IN} in einen Phasendetektor 8 ergeben sich zeit- bzw. frequenzabhängige Spannungen U_{A}(t) bzw. U_{A}(f) und U_{ϕ}(t) bzw. U_{ϕ}(f). Durch Komparatoren 9, 10 können zum Zeit- / Frequenzpunkt der Über- bzw. Unterschreitung gewisser Spannungswerte, die bestimmte Amplituden und / oder Phasendifferenzen kennzeichnen, Schaltflanken erzeugt werden, die durch die Steuer- und Auswerte- und Ausgabeeinheit 6 auswertbar sind. Ergebnis dieser Auswertung sind Frequenzwerte, bei denen der Amplituden- und / oder Phasenverlauf des Vierpols Extremwerte bzw. starke Änderungen aufweist. Aus diesen Frequenzwerten sind eindeutige Rückschlüsse auf den Bedeckungszustand des Sensors möglich.

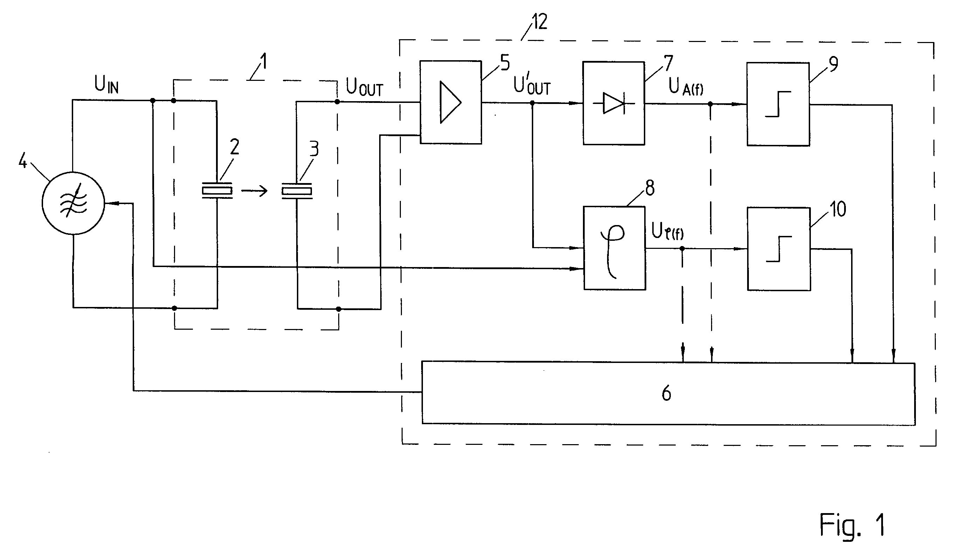

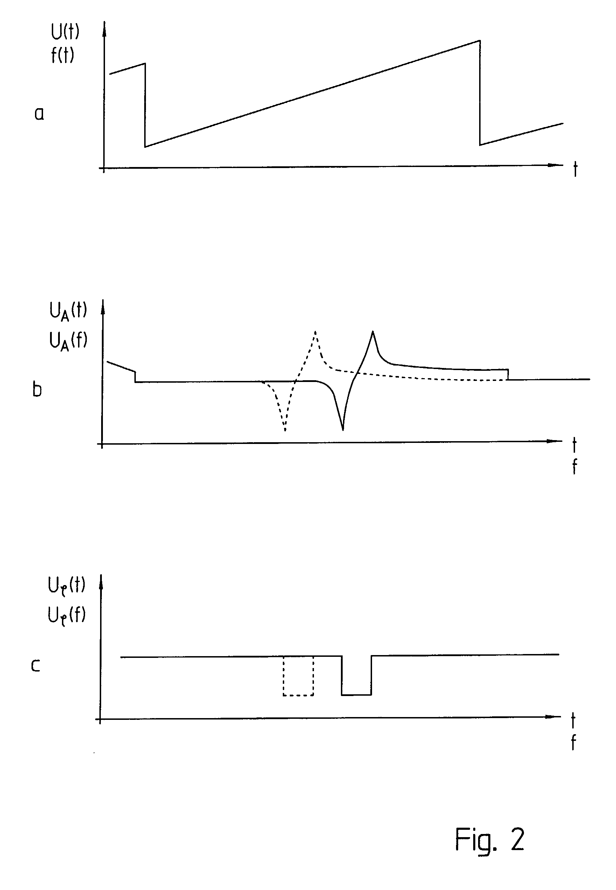

Fig. 2 zeigt beispielhaft exemplarische Signalverläufe in Schaltungspunkten innerhalb der Fig. 1. Im Diagramm 2a ist der Spannungsverlauf der steuernden Spannung des VCO 4 über der Zeit aufgetragen. Der lineare, sägezahnförmige Anstieg repräsentiert bei vorausgesetztem linearen Zusammenhang zwischen Steuerspannung und Frequenz ebenso den Frequenzanstieg der Erregerspannung U_{IN} über der Zeit.

In Diagramm 2b ist die Amplitude der Ausgangsspannung U_{OUT} bzw. U_{OUT}' über der Zeit t bzw. der Frequenz f aufgetragen. Da Zeit und Frequenz nach dem Diagramm a linear verknüpft sind, sind Zeit- und Frequenzachse für einen Frequenzdurchlauf zueinander proportional. Die als U_{A}(t) bzw. U_{A}(f) bezeichnete Amplitudenspannung am Ausgang des Detektors 7 weist charakteristische Extremwerte auf, die sich bei Eintauchen des Sensors verschieben. Die durchgezogen gezeichnete Kurve markiert hier den Verlauf bei frei in Luft schwingendem Sensor, die gestrichelt gezeichnete Kurve bei beispielsweise in Wasser eingetauchtem Schwingelement. Diagramm 2c zeigt in analoger Weise den Phasenverlauf von Ausgangsspannung U_{OUT}' zu U_{IN}, bezeichnet als U_{ϕ}(t) bzw. U_{ϕ}(f), nach Fig. 1 erzeugt vom Phasendetektor 8. In den beiden Diagrammen 2b und 2c sind außerdem jeweils Komparatorschwellen der Komparatoren 9, 10 eingezeichnet, die an Stellen starker Signaländerung ein Schaltsignal liefern. Die Zeit- bzw. Frequenzlage dieser Schaltsignale ergibt beispielsweise die Resonanzfrequenzen f1 und f2, die charakteristisch für Schwingen in Luft und in eingetauchtem Zustand sind.

In einer Variante der Vorrichtung von Fig. 1 wird auf die Komparatoren 9, 10 verzichtet und stattdessen wie gestrichelt gezeichnet die Spannungen U_{A}(f) bzw. U_{ϕ}(f) direkt der Steuer-, Auswerte- und Ausgabeeinheit 6 zugeführt. Diese kann beispielsweise als wesentlichen Teil einen Mikrocontroller enthalten, der über integrierte Analog/Digital- und Digital/Analogwandler verfügt. Damit kann er gleichzeitig über den D/A-Wandler zeitdiskrete Steuerspannungswerte für den VCO 4 generieren und die Systemantwort in Form der Amplitude Uₐ(f) und Phasendifferenz U_{ϕ}(f) in einen Digitalwert wandeln und abspeichern. Der so gespeicherte Datensatz für einen einmaligen Frequenzdurchlauf lässt sich durch bekannte mathematische Methoden auf Extremwerte und starke Änderungen untersuchen. Aus den gefundenen charakteristischen Signalmerkmalen wird ein Endergebnis über den Eintauchzustand des Sensorelements ermittelt und diese Information als Leer- oder Vollmeldung in bekannter Weise ausgegeben.

Eine weitere Möglichkeit, die in Fig. 1 nicht dargestellt ist, ergibt sich durch den zusätzlichen Verzicht auf die beiden Detektoren 7 und 8. Stattdessen können die Ein- und Ausgangsspannung U_{IN} bzw. U_{OUT}' direkt digitalisiert und die Amplituden- bzw. Phasenauswertung ebenfalls digital innerhalb des Mikrocontrollers erfolgen.

Eine weitere vorteilhafte Weiterentwicklung, die ebenfalls in Fig. 1 nicht dargestellt ist, besteht darin, die Ausgangsspannung U_{OUT} bzw. U_{OUT}' schmalbandig zu filtern. Das dazu verwendete Bandfilter wird dazu der über den VCO 4 eingestellten Frequenz nachgeführt und lässt dadurch nur den engen Frequenzbereich passieren, der der Erregerfrequenz entspricht. Somit werden alle Störfrequenzen wirkungsvoll unterdrückt. Das dazu notwendige frequenzvariable Bandfilter lässt sich entweder mit diskreten Bauteilen oder im Falle der direkten Digitalisierung von U_{IN} und U_{OUT}^{(')} digital in Form eines Programmablaufs des Mikrocontrollers realisieren.

Durch eine relativ hohe Güte des elektromechanischen Schwingsystems 1 bedingt erfolgt die Antwort des Systems auf eine Anregung relativ stark verzögert. Das bedeutet, dass für eine exakte Bestimmung des Übertragungsverhaltens des Vierpols 1 über der Frequenz der Frequenzdurchlauf entsprechend langsam durchgeführt werden muss. Sind jedoch schnelle Reaktionszeiten des Sensors auf eine Befüllung oder Entleerung notwendig, so ist es nicht unbedingt erforderlich, das Vierpol-Übertragungsverhalten exakt zu bestimmen. Da im Allgemeinen ein großer Frequenzunterschied zwischen Resonanz bei frei schwingendem Sensor und eingetauchtem Sensor besteht, genügt ein schneller Frequenzdurchlauf, bei dem das System zwar bei Anregung nicht auf volle Ausgangsamplitude aufschwingen kann, aber die Lage der Extremwerte trotz verminderter Amplitude noch zweifelsfrei erkennbar ist. Besonders auch aus dem Phasenverlauf ist trotz schneller Wobbelung die Resonanzfrequenz gut bestimmbar, da an diesem Punkt die Phasendifferenz sich ziemlich abrupt um 180° ändert. Diese starke Änderung macht sich auch dann bemerkbar, wenn schneller als für eine exakte Messung zulässig über den Frequenzbereich gewobbelt wird. Wenn die Resonanzstelle auf diese Art schnell, aber noch relativ ungenau gefunden ist, lässt sich der Frequenzbereich der Wobbelung stark verringern auf die Umgebung der Resonanzstelle, so dass dadurch die Wobbelgeschwindigkeit wieder reduzierbar und die Genauigkeit der Ermittlung der Übertragungsfunktion größer wird. Verschwindet die Resonanzstelle plötzlich aus dem überwachten Frequenzfenster, so kann sofort der Sensorausgang von "leer" auf "voll" bzw. umgekehrt wechseln, und ein anschließender schneller Frequenzdurchlauf bestätigt entweder, dass die Resonanzstelle in der Frequenz verschoben wurde, oder das Fehlen der Resonanzstelle legt eine Sensorstörung nahe, die daraufhin sofort zur Anzeige gebracht werden kann.

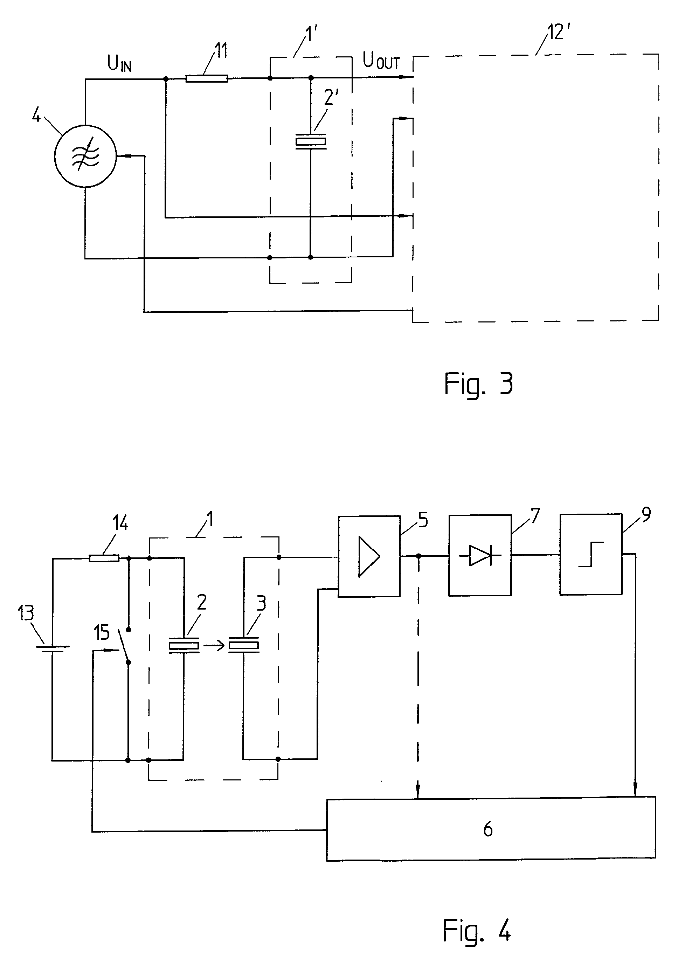

In Fig. 3 ist eine Vorrichtung dargestellt, die sich von der eben beschriebenen Vorrichtung aus Fig. 1 dadurch unterscheidet, dass auf Grund der Verwendung eines einzelnen elektromechanischen Wandlers 2' zur Anregung und Detektion das Schwingsystem nun als Zweipol zu betrachten ist. An die Stelle der Bestimmung des Übertragungsverhaltens des Vierpols 1 tritt in diesem Fall die Bestimmung der Impedanz des Zweipols 1'. Dazu regt die vom VCO 4 erzeugte Wechselspannung U_{IN} eine Serienschaltung einer bekannten Impedanz 11 mit der zu ermittelnden Impedanz des Zweipols 1' an. Durch Ermittlung der Amplitudenverhältnisse U_{IN} zu U_{OUT} und / oder der Phasendifferenz der beiden Spannungen lassen sich Rückschlüsse auf das Impedanzverhalten des Zweipols 1' über der Frequenz ziehen und daraus ist der Betriebszustand des Sensors ableitbar. Der Elektronikteil 12' dieser Vorrichtung kann dabei dem Elektronikteil 12 aus Fig. 1 entsprechen. Folglich kann alles für die Vorrichtung aus Fig. 1 beschriebene im übertragenen Sinn auch für diese Schaltungsvariante gelten.

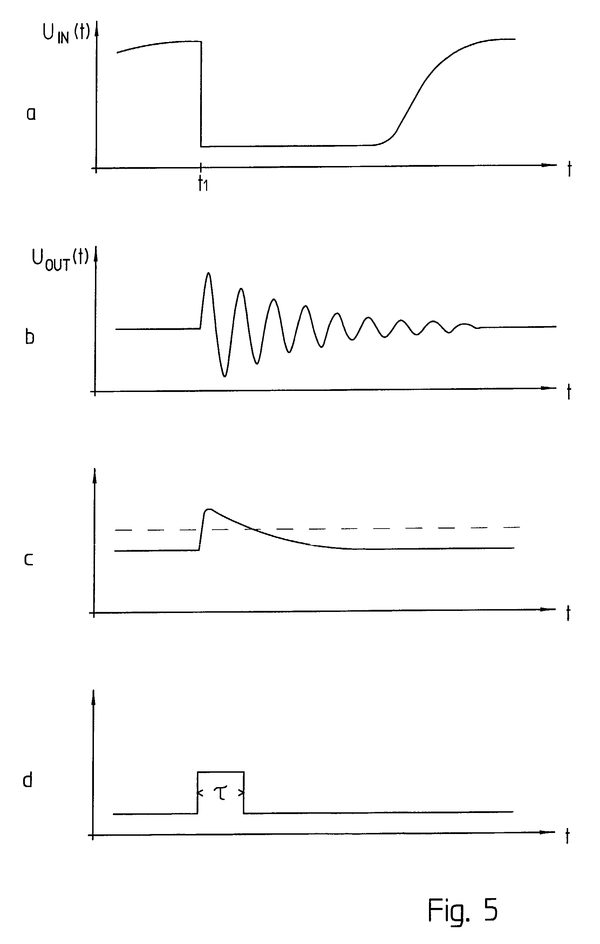

Fig. 4 unterscheidet sich grundsätzlich von Fig. 1 nur durch die Art der Anregung des schwingungsfähigen Systems. Statt einer kontinuierlichen bzw. diskreten Frequenzwobbelung wird hier das Schwingsystem angeregt durch einen elektrischen Stoß. Dieser wird realisiert durch einen Spannungssprung oder einen kurzen Spannungsimpuls. In Fig. 4 ist hierzu eine Realisierung über die Gleichspannungsquelle 13, den Widerstand 14 und den Schalter 15 angedeutet. Bei geöffnetem Schalter 15 lädt die Spannungsquelle 13 über den Widerstand 14 den elektromechanischen Wandler 2 auf einen bestimmten Spannungswert (vgl. Fig. 5a). Zum Zeitpunkt t1 wird der Schalter gesteuert durch die Steuer- Auswerte- und Ausgabeeinheit 6 geschlossen, wodurch das elektromechanische Schwingsystem, dargestellt durch den Vierpol 1, zur Eigenschwingung angeregt wird. Am Ausgang des Vierpols ergibt sich eine gedämpfte Schwingung wie in Fig. 5b skizziert. Durch Verstärkung, Amplitudendetektion (vgl. Fig. 5c) und Vergleich mit einer Komparator-Ansprechschwelle kann beispielsweise eine Ausschwingdauer τ bestimmt werden, die charakteristisch dafür ist, ob das Sensorelement eingetaucht ist oder nicht (vgl. Fig. 5d). Zusätzlich oder alternativ ist die Frequenz der abklingenden Eigenschwingung und die Maximalamplitude auswertbar. Verfahren hierzu sind dem Fachmann bekannt und werden hier nicht näher erläutert. Technisch gesehen bedeutet dieses elektrische "Anklopfen" des mechanischen Schwingsystems eine breitbandige Frequenzanregung, auf die das System mit einer Filterung reagiert.

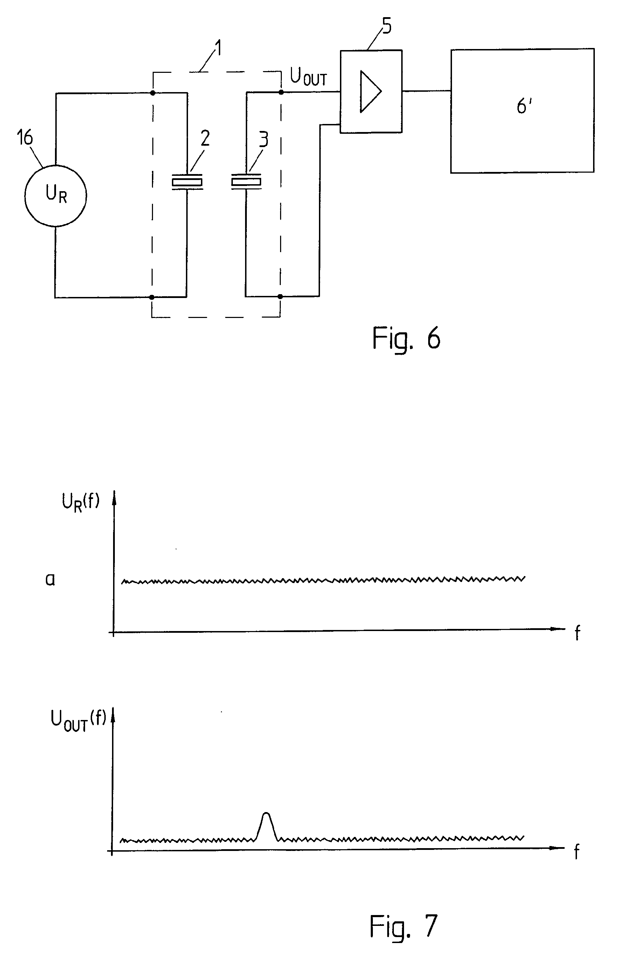

Auf diesem Prinzip beruht auch das Verfahren, dessen Ausführungsform in Fig. 6 dargestellt ist. Im Unterschied zu Fig. 4 wird die breitbandige Frequenzanregung hier aber durch eine Rauschquelle 16 realisiert. Diese rauscht über den interessierenden Frequenzbereich, auf den das elektromechanische Schwingsystem ansprechen könnte, gleichmäßig, wie in Fig. 7a dargestellt ist. Am Ausgang des Vierpols 1 tritt nur noch ein geringer Frequenzanteil des ursprünglichen Anrege-Spektrums auf. Durch Bestimmung der Frequenz dieses Anteils, dargestellt in Fig. 7b als Spannung aufgetragen über der Frequenzachse, ist wie zuvor schon beschrieben die Grenzstanderkennung mittels dieses Sensors ermöglicht. Die Frequenzauswertung des Ausgangssignals kann innerhalb der Steuer- Auswerte- und Ausgabeeinheit 6' beispielsweise über schmalbandige verstellbare Bandfilter oder in bevorzugter Weise über eine Transformation des Zeitsignals in den Frequenzbereich mittels einer schnellen Fouriertransformation FFT erfolgen.

## Patentansprüche

1. Verfahren zur Feststellung und/oder Überwachung eines vorbestimmten Füllstandes eines Füllgutes in einem Behälter mit einer in den Behälterinnenraum zeigenden Schwingstabsonde die Bestandteil eines elektromechanischen Schwingungssystems ist,
**dadurch gekennzeichnet, dass** nach einer erfolgten Anregung des Schwingungssystems eine oder mehrere charakteristischer Kenngrößen gemessen und diese Kenngrößen bzw. Kenngrößen bei der Auswertung der Messung berücksichtigt werden.

2. Verfahren nach Anspruch 1,
**dadurch gekennzeichnet, dass**
als Kenngröße (n) das elektrische Übertragunsverfahren des als Vierpol zu betrachtenden Schwingsystems oder die Impedanz des als Zweipol betriebenen Schwingungselements bestimmt und ausgewertet wird bzw. werden.

3. Verfahren nach Anspruch 2,
**dadurch gekennzeichnet, dass**
das Übertragungsverhalten bzw. Impedanz charakteristische Merkmale aufweisen, welche eindeutig auf den Befüllungszustand schließen lasse, bestimmt und ausgewertet wird.

4. Verfahren nach einem der Ansprüche 1 bis 3.
**dadurch gekennzeichent, dass**
das Schingsystem mit verschiedenen Frequenzen angeregt und bei allen Frequenzen die Reaktion des Systems gemessen wird.

5. Verfahren nach Anspruch 4,
**dadurch gekennzeichnet, dass** die Anregung mit verschiedenen Frequenzen erfolgt, wobei eine bestimmte Anzahl von diskreten Frequenzpunkten gezielt nacheinander angfahren wird und dieser Frequenzdurchlauf periodisch wiederholt wird.

6. Verfahren nach Anspruch 4,
**dadurch gekennzeichnet, dass**
ein vorgegebener Frequenzbereich kontiunierlich durchfahren wird (Wobbelung).

7. Verfahren nach einem der Ansprüche 1 bis 6,
**dadurch gekennzeichent, dass** das Schwingsystem als Vierpol betrachtet wird und das frequenzabhängige Verhältnis sowohl von Ausgangw- zu Erregungsamplitude und/oder von Ausgangs- zu Eingangsphase der elektrischen Wechselspannung gemessen und ausgewertet wird.

8. Verfahren nach einem der Ansprüche 1 bis 6,
**dadurch gekennzeichnet, dass** Schwingungssystem als Zweipol betriebenen und eine Serienschaltung aus einer bekannten Impedanz und der zu untersuchenden Impedanz der Zweipolschaltung gebildet wird, über der eine frequenzvarialbel Eingangs- bzw. Erregerspannung eingespeist wird, wobei durch Messung des Verhältnisses der Spannung über der gesamten Serienschaltung zu der Spannung über dem Zweipol sowie eventuell der Messung der Phasenverschiebung dieser Spannungen frequenzabhängige Kennwerte der Zweipolimpedanz ermittelt und ausgwertet werden.
